Europäisches Patentamt

European Patent Office

Office européen des brevets

(11) Publication number: **0 512 780 A1**

# EUROPEAN PATENT APPLICATION

(21) Application number: **92304006.7**

(22) Date of filing: **01.05.92**

(51) Int. Cl.⁵: **C01B 21/04**, B01D 53/04

(30) Priority: **03.05.91 US 695523**

(43) Date of publication of application:
**11.11.92 Bulletin  92/46**

(84) Designated Contracting States:
**BE DE GB IT NL**

(71) Applicant: **GENERON SYSTEMS**
**515 West Greens Road, Suite 100**
**Houston, Texas 77067(US)**

(72) Inventor: **McMullen, Nigel P.**
**16102 Abberton Hill Drive**
**Spring, Texas 77379(US)**
Inventor: **Hojsak, Miro**
**8316 Winningham Lane**
**Houston, Texas 77055(US)**

(74) Representative: **Gough, Peter**
**c/o THE BOC GROUP PLC Patent Department**
**Chertsey Road**
**Windlesham Surrey GU20 6HJ(GB)**

(54) Method and apparatus for continuously separating nitrogen.

(57) Method and apparatus for continuously feeding compressed air by a compressor (104) and optionally a storage vessel (106) to at least two PSA systems (100,200) connected through common feed (108) and product (158) lines in which at least one of the PSA systems continues to receive compressed air and produce nitrogen gas.

FIG. 2

The present invention is directed to a method and apparatus for the removal of nitrogen gas from air by pressure swing adsorption in which at least two of such systems are operated out of phase so as to provide a continuous supply of nitrogen gas.

Pressure swing adsorption systems separate nitrogen from air by the preferential adsorption/desorption of oxygen and other gaseous atmospheric components. Such systems typically include multilayered beds containing absorbers such as molecular sieve materials which preferentially adsorb oxygen and other gases while permitting nitrogen to pass through as product.

As the absorbers become saturated with oxygen, the system becomes less efficient in separating nitrogen product. Accordingly, the absorbers must be regenerated, typically by reducing the pressure of the bed. An oxygen enriched waste gas is vented from the system during this depressurization step.

The pressure swing adsorption process cycle therefore includes two essential steps; pressurization/adsorption to separate nitrogen from air and depressurisation/desorption to rid the beds of oxygen and other gases and to prepare the beds for the next production cycle. In order to maximise production of nitrogen gas, PSA systems may be provided with two or more beds. Thus, while one bed is being regenerated and prepared for the next production cycle, the other bed is producing nitrogen.

For example, in a PSA system having two beds, as compressed air enters the first bed, water vapor, oxygen and carbon dioxide are adsorbed. After operating pressure is reached, nitrogen product flows from the first bed into a nitrogen product reservoir prior to entering the distribution piping.

Upon completion of nitrogen production from the first bed, both beds are subjected to a pressure equalisation step. The pressure in the second bed is increased by providing it with pressurized gas from the first bed thereby decreasing the pressure in the first bed until the pressure in the two beds substantially equalises. After the second bed is pressurized up to an intermediate operating pressure during pressure equalisation, compressed air is supplied to repressurize the second bed to operating pressure so that it can produce nitrogen gas while the first bed undergoes depressurization, thereby desorbing the waste gases which are vented to the atmosphere. Thus, during pressure equalisation, depressurization and repressurization, nitrogen production is terminated. Nitrogen production does not begin again until compressed air is fed to the second bed and operating pressure is reached.

When compressed air is supplied to the beds, the pressure builds in the vessel and the adsorptive capacity and adsorption rate of the adsorber (e.g. molecular sieve material) increases significantly. The compressed air feed gas must pressurize the interstitial void space and also supply enough gas to meet the increasing adsorption loading demand of the adsorber. The quantity of air required for adsorber loading represents a large portion of the compressed air introduced into the PSA system over the entire process cycle.

The compressed air is provided to the vessel by a compressor. The output of the compressor is generally insufficient in conventional PSA systems to load the system with compressed air within a commercially viable cycle time. Once pressurization of the bed is complete, the air feed flow rate drops to below the overall average air flow rate for the balance of the production step. The compressor output that is in excess of the production step requirement is stored in the storage vessel. In conventional PSA systems the flow rate of compressed air during peak loading can exceed the average flow rate of the compressor by over 100%. As a result, conventional systems employ a large capacity storage vessel which serves as an additional source of compressed air during peak loading. Thus, the compressed air stored in the storage vessel is used to supplement the compressed air feed from the compressor during peak loading at the onset of nitrogen production.

Conventional PSA systems also employ a vessel for storing nitrogen product gas. The nitrogen gas stored in this vessel provides product flow during the equalisation/depressurization/repressurization stage when the production of nitrogen gas is temporarily suspended. The storage vessel must be sufficiently large to provide a flow of product at pressures similar to that obtained when the product is discharged from the bed during the production phase of the cycle.

Nitrogen gas is utilised in such remote locations as oil fields where construction of permanent nitrogen producing facilities is difficult. Accordingly, PSA systems have been constructed on transportation vehicles which are driven to the remote locations as described, for example, in GB 2,186,682. The size of the transportation vehicle is dependent on the size and number of the components of the PSA system. Because conventional PSA systems require large vessels for storing compressed air and nitrogen product, the size of the transportation vehicle must be enlarged accordingly.

Reducing the size or eliminating the storage vessels from the PSA system would not only improve efficiency of production but would also reduce the size and cost of transportation vehicles used to carry these systems to remote locations.

According to one aspect of the present invention a method of separating nitrogen gas from air is characterised by the steps of:

(a) continuously feeding compressed air by a compressor and optionally a storage vessel to at least two PSA systems connected together through a common compressed air feed line and a common nitrogen gas product line, each PSA system comprising at least two adsorbent beds;

(b) continuously removing nitrogen gas from one bed of at least one of the PSA systems and forwarding the nitrogen gas to said product line;

(c) regenerating at least one of the beds to remove oxygen and other waste gases; and

(d) temporarily terminating nitrogen production of at least one PSA system, while at least one of the other PSA systems continues to receive compressed air and produce nitrogen gas.

According to a further aspect of the present invention a method of separating nitrogen gas from air is characterised by the steps of:

(a) feeding air under pressure to at least one of two or more PSA systems each system comprising at least two adsorbent beds which preferentially adsorb the remaining constituents of the air relative to nitrogen; and

(b) the system being arranged to operate out-of-phase such that at least one system is producing nitrogen at substantially all times during operation of the method.

According to yet a further aspect of the present invention an apparatus for separating nitrogen gas from air comprises:

(a) at least two PSA systems together through a common compressed air feed and a common nitrogen gas product line, each system comprising at least two adsorbent beds;

(b) means for continuously feeding compressed air to at least one bed of at least one PSA system;

(c) means for continuously removing nitrogen gas from at least one bed of at least one PSA system;

(d) means for terminating nitrogen production of one of said PSA systems while at least one of the other PSA systems continues to receive compressed air and produce nitrogen gas.

The present invention is directed to a method and apparatus for the continuous production of nitrogen gas from the continuous supply of air in a pressure swing adsorption system. Nitrogen gas is continually produced even during the periods when the adsorbent beds are undergoing equalisation/depressurization/ repressurization. As a consequence of the present invention, vessels conventionally used to store air and nitrogen during the cycle transitions are substantially reduced in size or entirely eliminated from the system resulting in improvement in both capital and operational efficiency, as well as making the system more suitable for mounting on a transportation vehicle.

More specifically, the present invention comprises at least two PSA systems each containing a minimum of two adsorbent beds. Each of the two PSA systems is connected to the other system by a common feed line for receiving compressed air and a common line for the removal of the product nitrogen gas. The systems are operated out of phase such that while compressed air is being fed to at least one of the systems, product nitrogen gas is being removed from at least one of the systems at all times.

The difference between the flow rate of compressed air during peak loading compared to the average compressor flow rate is significantly reduced, enabling the use of a much smaller compressed air storage vessel. In addition, the present invention provides for continuous nitrogen discharge from the system in a manner which reduces the pressure difference in the distribution piping, thereby enabling the use of a smaller product storage vessel or eliminating the need for such a vessel.

The present invention also provides benefits for the operation of permanent nitrogen producing facilities where the size of storage vessels is not a primary concern. By using the same large compressed air storage vessel, the present invention obtains higher average feed pressures, which will increase the nitrogen product rate of the system and thereby increase plant production.

In a preferred form of the invention, the PSA systems are operated symmetrically out of phase by a time corresponding to the number of systems divided by the part-cycle time, wherein the term "part-cycle" is defined as one-half of a full cycle.

Embodiments of the invention will now be described, by way of example, reference being made to the Figures of the accompanying diagrammatic drawings in which:-

Figure 1 is a schematic view of a prior art PSA system having two adsorbent beds;

Figure 2 is a schematic view of an embodiment of the present invention employing two PSA systems each with two adsorbent beds and operating 180° out of phase; and

Figure 3 is a graph showing the valve timing sequence of an embodiment of the present invention employing three PSA systems each having two adsorbent beds and operating 120° out of phase.

Figure 4 is a graph showing the flow rate of compressed air and nitrogen product in the two phase system shown in Figure 2;

Figure 5 is a graph showing the change in pressure within the storage vessels of the two component PSA systems compared with the prior art system of Figure 1;

Figure 6 is a graph showing the flow rate of compressed air and nitrogen product in a three component system in accordance with the invention; and

Figure 7 is a graph showing the change in pressure with the storage vessels of the three component PSA systems.

In a conventional pressure swing adsorption system having two beds, while one of the beds is receiving compressed air and producing nitrogen gas, the other bed is being regenerated to remove oxygen and other waste gases. During the equalisation and depressurization steps leading to regeneration of the bed, the flow of air to the system and the withdrawal of nitrogen gas from the system is temporarily suspended. As a consequence, the incoming compressed air and outgoing nitrogen must be supplemented by supplies stored in large vessels upon completion of the equalisation and depressurization steps.

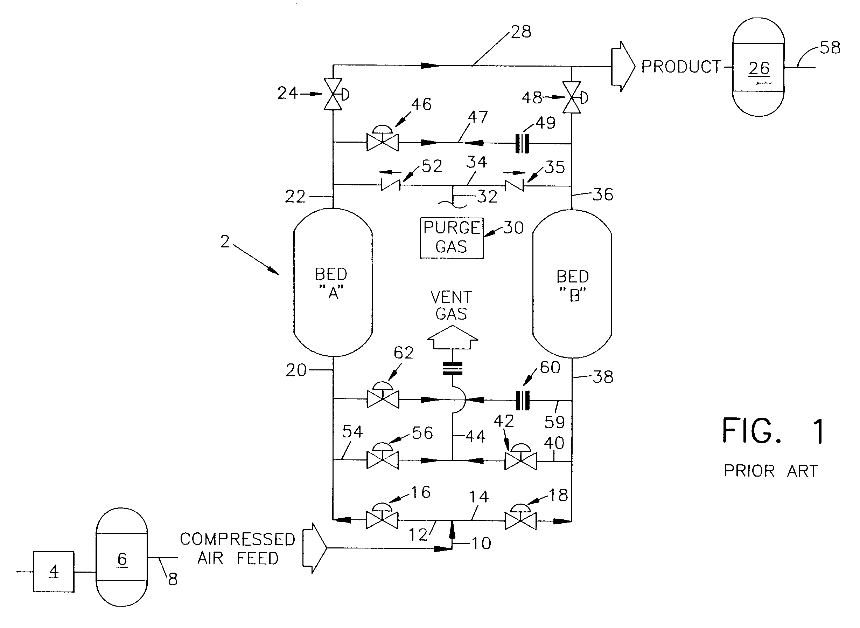

Referring to Figure 1, there is disclosed a conventional pressure swing adsorption system 2 having two beds "A" and "B". Air from a source (not shown) is fed to a compressor 4 to raise the pressure of the air and to accumulate compressed air during the non-production phase and output compressed air during peak loading of the beds. The compressed air is fed to a storage vessel 6. The compressed air is then fed via line 8, 10 to an outlet 12 leading to bed A and an outlet 14 leading to bed B. Each outlet 12, 14 is controlled by respective valves 16, 18. When valve 16 is opened, allowing the compressed air to reach bed A, valve 18 remains closed so that bed B may undergo regeneration during the depressurization phase.

The compressed air enters the bed A through the open valve 16 via a line 20. The bed A contains at least one adsorbent material capable of preferentially adsorbing oxygen and other waste gases while allowing substantially pure nitrogen to pass out of the bed A through a line 22, a valve 24 and into a nitrogen storage vessel 26 via a product line 28.

While bed A is producing nitrogen gas, bed B is at atmospheric pressure. Upon completion of the nitrogen production cycle in bed A, the system undergoes equalisation to raise the pressure in bed B to an intermediate pressure. This is accomplished by closing the nitrogen product valves 24, 48 and the compressed air intake valves 16, 18. Thus, the input of compressed air and the output of nitrogen product is temporarily suspended. Equalisation is accomplished by passing a portion of the pressurized gas from the top of the bed A via line 22, valve 46, line 47 restrictive orifice 49 through line 36 and into the top of the bed B. In addition, pressurized gas is passed from the bottom of the bed A via a line 20, valve 62, line 59, restrictive orifice 60 and line 38 into the bottom of bed B.

Once equalisation is completed so that beds A and B are at similar pressures, bed A undergoes regeneration by depressurizing to atmospheric pressure to remove oxygen enriched waste gases. This is accomplished by closing the equalisation valves 46, 62 and opening the regeneration valve 56. The waste gases pass via the line 20 from the bottom of the bed A to line 54, through valve 56 and are vented from the system via the vent outlet 44. As a consequence, the bed A is regenerated. Further cleansing of the bed A may be made by passing a purge gas, such as substantially pure nitrogen gas, from a source 30, through lines 32, 34 respectively, via valve 52 and into bed A via the line 22. When the bed B is further cleansed, the purge gas passes through the lines 32, 34 respectively, valve 35 and the line 36. The adsorbers contained therein are ready for adsorbing waste gases in a new nitrogen production cycle.

Since the pressure in bed B has been raised to an intermediate pressure, it is ready to receive compressed air. The compressed air is provided through valve 18 and line 38. In order to get sufficient compressed air to load quickly bed B up to operating pressure, the compressed air feed must be supplemented by a significant amount of compressed air from the storage vessel 6. For example, the average flow rate of a compressor used in conventional PSA systems is about 28,000 SCFH (standard cubic feet per hour). At peak loading the bed requires about 68,000 SCFH of air. Accordingly, the difference between the average flow rate from the compressor and the requirements at peak loading must be supplied by compressed air from the storage vessel 6. This difference is almost 150% of the average compressor flow rate and therefore requires a large storage vessel relative to the capacity of the compressor.

Once bed B has been quickly loaded, valve 48 is opened, allowing product gas to enter the product line 28 via the line 36 from which it enters the storage vessel 26. A distribution line 58 extends from the storage vessel 26 to provide a flow of nitrogen gas to the point of distribution. The storage vessel 26 provides a continuous stream of nitrogen product even when nitrogen production is terminated during equalisation/repressurization. To accomplish this, however, the storage vessel 26 must be sufficiently large to store enough nitrogen gas during those times of the process (i.e. equalisation/depressurization) when product is not entering the vessel.

After nitrogen production in bed B is completed, the valve 48 is closed as are the valves 16, 18 to stop the compressed air feed. The equalisation circuit is activated by opening valves 46, 62 and the pressurized gas is fed from the top and bottom of bed B to bed A to raise the pressure therein to an intermediate pressure level. Bed B is then depressurized by venting the oxygen enriched waste gases via lines 38, 40 through valve 42 and out of the vent outlet 44.

Thereafter, compressed air from the compressor 4 and storage vessel 6 is fed to bed A through valve 16 via line 20 to raise bed A to the desired operating pressure thereby commencing the nitrogen production cycle from bed A.

The above-described prior art system is disadvantageous because of the loss of nitrogen production during equalisation and depressurization and the necessity of employing large and costly storage vessels for the compressed air and nitrogen product gas. These vessels are necessary because of the significant difference between the average flow rates and the rates which are necessary at peak loading and production. The latter disadvantage is particularly troublesome in the deployment of portable PSA systems such as for supplying nitrogen gas in oil field operations as disclosed in United Kingdom Patent No. 2,186,682.

The present invention is directed to a method and apparatus for preferentially separating nitrogen gas from air using pressure swing adsorption. The present system provides for continuous nitrogen production even during equalisation/ repressurization. The large differences between the average flow rates of compressed air and nitrogen gas and the rates required at peak loading are significantly reduced thereby enabling the size of the storage vessel to be reduced or eliminated entirely.

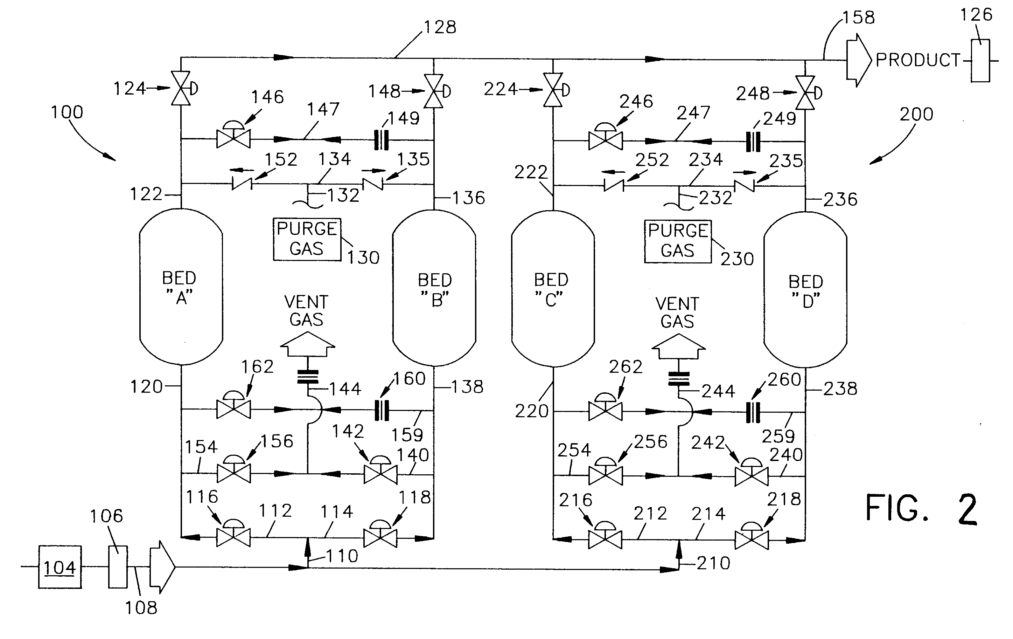

Referring to Figure 2, there is disclosed a first embodiment of the invention employing two PSA systems 100 and 200 connected to a common compressed air feed line and a common nitrogen product line. The overall system is operated out-of-phase such that when one of the PSA systems is undergoing equalisation/repressurization, and therefore temporarily not producing nitrogen gas, the other PSA system is receiving compressed air and producing nitrogen gas.

The two PSA systems 100 and 200 are interconnected by a common compressed air feed line 108 and a common nitrogen production line 128. The embodiment shown in Figure 2 is provided with a compressed air storage vessel 106 and nitrogen product gas storage vessel 126. As will be explained in more detail below, these vessels may be much smaller than the corresponding storage vessels described in connection with the prior art system of Figure 1. It also should be understood that the present invention may be operated in a manner which eliminates the need for at least the nitrogen product gas storage vessel 126.

In accordance with the embodiment shown in Figure 2, compressed air from the compressor 104 and the storage vessel 106 proceeds through the line 108 to either or both of the systems 100, 200 when in the nitrogen production phase. At least one of the systems will be producing nitrogen gas so that during a complete cycle of the process, the line 128 will be receiving nitrogen gas.

The dual PSA system shown in Figure 2 will now be described with reference to a mode of operation in which bed A of the system 100 and bed D of the system 200 are the first beds to receive compressed air and commence production of nitrogen gas. It should be understood that the selection of the particular beds from each PSA system for initial nitrogen production is a matter of choice.

Pressurized air passes from the compressor 104 and storage vessel 106 via line 108 into respective lines 110, 210. Valves 116 and 218 are opened to allow the compressed air to proceed via the lines 112, 120 and 214, 238 into the respective beds A and D. Initially, valve 248 is opened to allow nitrogen gas to pass into the common product line 128, the storage vessel 126 and then into the distribution line 158.

During this stage of peak loading of beds A and D, the capacity of the compressor 104 to supply compressed air may be exceeded by the demand of beds A and D to attain operating pressure. The additional compressed air is supplied by the storage vessel 106. The difference between the flow rate requirements for peak loading of the beds and the capacity of the compressor is far less in the present system than in conventional systems, typically no more than about 67% as compared with 150% or more for conventional systems.

At the same time as beds A and D receive compressed air, valves 142 and 256 are opened to enable beds B and C to undergo regeneration by depressurization in which waste gases are eliminated by passage through lines 140, 254 and the vents 144, 244. Further cleansing of the beds may be made by passing a purge gas, such as substantially pure nitrogen gas, from a source 130, 230 through lines 132, 232, lines 134, 234, valves 135; 252, and into the beds B and C via the lines 122, 136. Thus in the initial stage of operation, beds A and D receive compressed air, bed D releases nitrogen product gas for distribution, while beds B and C undergo regeneration. Since bed A is receiving compressed air, the resulting nitrogen gas is shortly thereafter released via the line 122 by opening the valve 124 for passage into the product line 128.

Subsequently, the valve 218 is closed terminating the flow of compressed air to the bed D while continuing the compressed air feed to the bed A so that nitrogen continues to be released as product from the bed A.

During this interval, the beds C and D undergo equalisation. This is accomplished by passing pressurized gas from the top of bed D via the line 236 through a restrictive orifice 249, line 247, valve 246 through the line 222 into the top of bed C. Pressurized gas is also passed from the bottom bed D via the line 259, restrictive orifice 260, valve 262 through line 220 into the bottom of bed C. As a result, the pressure in beds C and D is substantially equalised. Thereafter, bed D is depressurized by opening valve 242 to vent the oxygen enriched gas via line 240 through the vent outlet 244, thereby fully regenerating bed D. Further cleansing of bed D may be made by passing a purge gas from a source 230 through lines 232, 234 respectively, valve 235 and line 236 in a manner as described previously in connection with beds B and C.

While bed D undergoes regeneration, valve 216 is opened to permit compressed air to flow through line 220 into bed C to initiate nitrogen production therein. Nitrogen gas is removed from the system 200 via the line 222 through the valve 224 and into the nitrogen production line 128. At this stage of operation both beds A and C are producing nitrogen gas while beds B and D are being regenerated.

Nitrogen production continues from bed C while beds A and B undergo equalisation. This is accomplished by closing valve 124 and opening the valves 146 and 162 to thereby open the equalisation circuit and provide a flow of pressurized gas from the top and bottom of bed A through line 122, valve 146, line 147 restrictive orifice 149, line 136 and line 120, valve 162, restrictive orifice 160, line 159 and the line 138 to the top and bottom of bed B in the same manner as described above for the equalisation of beds C and D. Once beds A and B have equalised, the valve 156 is opened to allow bed A to depressurize, thereby removing waste gases through the lines 120, 154 and the vent outlet 144. During this stage, bed C continues to receive compressed air and produce nitrogen gas while bed D undergoes regeneration. Bed A may be further cleansed by passing a purge gas from the source 130 through lines 132, 134, valve 152 and the line 122. Shortly thereafter valve 148 is opened allowing nitrogen product gas from bed B to enter the production line 128 along with product gas from bed C.

In the next stage, the flow of compressed air to bed C is terminated through lines 212, 220 by closing valve 216. Beds C and D then undergo equalisation by opening the valves 246, 262. Nitrogen gas continues to be supplied to the product line 128 from bed B as the result of the flow of compressed air through the valve 118 while bed A is regenerated as previously explained.

Once the equalisation of beds C and D is complete, the valve 218 is opened, allowing the compressed gas to enter the bed D. At the same time, the valve 256 is opened to depressurize bed C and remove waste gases via the line 254 and vent outlet 244. Shortly thereafter the valve 248 is opened and nitrogen from bed D is passed into the product line 128.

In the final sequence of the complete cycle described herein, the flow of compressed air to bed B via lines 114, 138 is terminated by closing valve 118 and nitrogen production is terminated by closing valve 148. Beds A and B then undergo equalisation as previously described as bed D continues to produce nitrogen product.

In the two component system shown in Figure 2, the PSA system 200 is operated 180 degrees out of phase with the PSA system 100. In other words, the start of the operational sequence of the valves in the system 200 is delayed from the onset of the system 100 by one-half the time it takes to complete one cycle. As a consequence, nitrogen product and compressed air continuously flow through the system and the need for additional capacity provided by the storage vessels required by conventional PSA systems is either reduced or eliminated.

The present invention may be carried out using more than two PSA systems. Each system is preferably operated out of phase by a time corresponding to the time of complete cycle divided by the number of operating PSA systems. Thus, a three PSA system will have each system operating 120 degrees out phase.

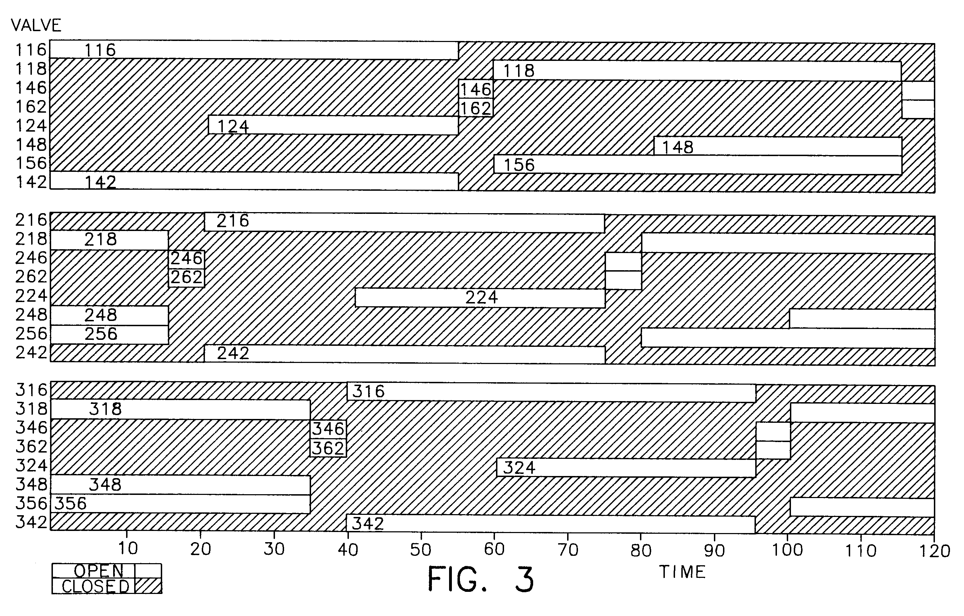

Referring to Figure 3, there is shown the timing sequence for three PSA systems operated in accordance with the present invention. The abscissa shows the length of time in seconds for a typical cycle while the ordinate lists the major operating valves for each system and the period in which they are open and closed. PSA systems 1 and 2 use reference numerals identified for the two PSA component system described in Figure 2. The corresponding valves of the third PSA system are identified with 300 series numerals.

Referring to Figure 3 and in describing a three component PSA system, beds A, D, and F initially receive compressed air through respective valves 116, 218 and 318. Beds D and F provide nitrogen product gas by the opening of valves 248 and 348. Beds B, C and E simultaneously undergo regeneration by depressurization through open valves 142, 256 and 350. In the next state of the cycle, valves 246 and 262 are opened thereby opening the equalisation circuit in the second PSA system so that beds C and D commence equalisation. The present system continues in successive steps until each system has undergone production, equalisation and depressurization in a manner which continually produces nitrogen gas from a continuous compressed air feed.

## EXAMPLE 1

The following example of the operation of a two component system is made with reference to Figures 2, 4 and 5.

At the start of the cycle, nitrogen production from bed D produces a flow rate of about 16,000 SCFH. After about 4 seconds, compressed air is forwarded to bed A at a peak loading of about 90,000 SCFH. Since the average capacity of the compressor system is about 54,000 SCFH (double that of the compressor capacity of the conventional single PSA system), the compressed air storage vessel supplies the additional compressed air (36,000 SCFH) needed to reach peak load. The storage vessel therefore supplies an amount of compressed air equal to about 67% of the compressor capacity as compared with about 152% for the single component system.

As soon as peak loading is reached, the compressed air requirements decrease over the next 26 seconds to about 42,000 SCFH which is below the average capacity of the compressor system (54,000 SCFH). The excess output of the compressor during this phase is sent to the storage vessel for use in the next production cycle.

During the decrease in compressed air fed to bed A (at about 20 seconds into the cycle) nitrogen gas is released from bed A. This increases the nitrogen flow rate from 16,000 to 32,000 SCFH up to the 30 second mark of the cycle. At this point, the release of nitrogen product from bed D is terminated and the equalisation of beds C and D begins followed by the depressurization of bed D. During this 4 second interval, the supply of compressed air to the system is reduced to about 27,000 SCFH and the flow rate of nitrogen drops to 16,000 SCFH.

At the time equalisation of beds C and D is completed, compressed air is fed to bed C while continuing to be fed to bed A. This results in a second peak load of the cycle at the rate of 90,000 SCFH. The compressed air is supplied from the compressor (54,000 SCFH) and the balance from the storage vessel (36,000 SCFH) and the cycle continues as previously described in connection with Figure 2.

An advantage of the present system arises out of the reduction in the difference between the flow rate of compressed air during peak loading and the average flow rate capacity of the compressors. In the example just provided, the storage vessel is required to provide only 67% of the compressor capacity during peak loading. Accordingly, there is less compressed air demand from the storage vessel than in conventional systems.

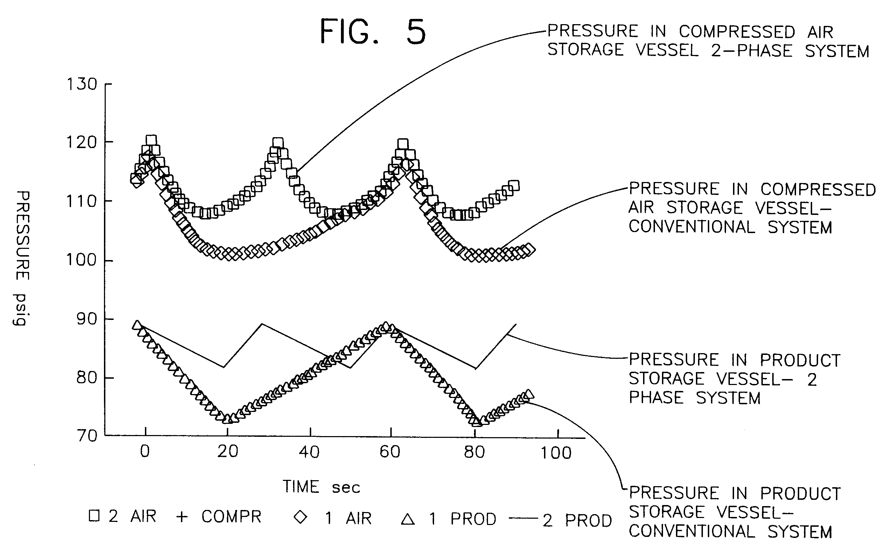

This is further shown with reference to Figure 5. The pressure in the compressed air storage vessel is plotted over the course of the process cycle. The change in pressure from the onset of peak loading (122 psig) to the lowest demand for compressed air (109 psig) is far less than the change in pressure for the prior art system (122 psig to 103 psig). As the required capacity of the compressed air storage vessel is reduced, the change in pressure is reduced.

Similarly, the present invention provides a more consistent flow rate of nitrogen product from the system and less reliance on storage vessel capacity to provide continuous nitrogen flow.

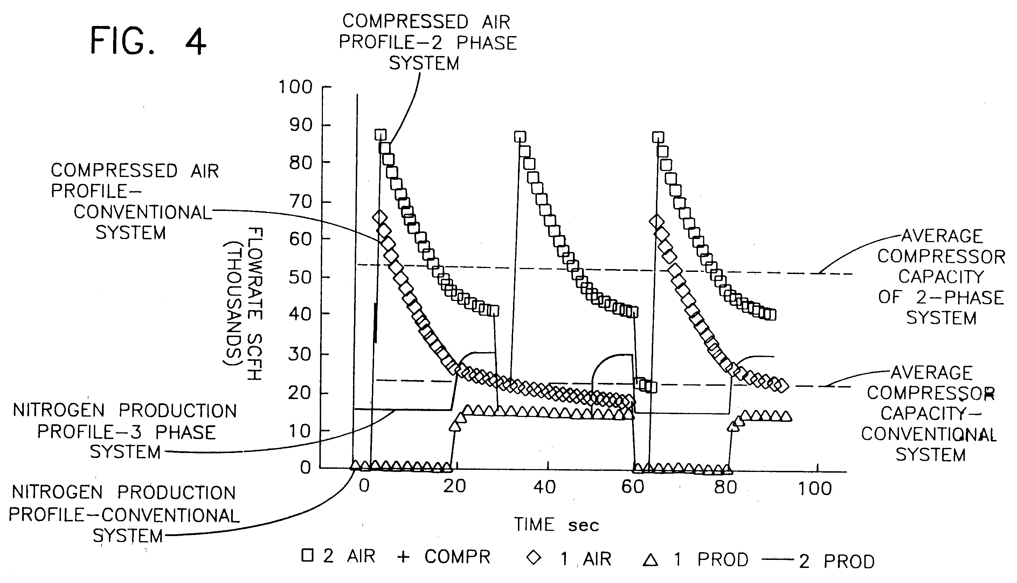

As shown in Figure 4, nitrogen flow rates in the conventional system vary from no production (during equalisation and depressurization) to a high of about 16,000 SCFH. During equalisation and depressurization, nitrogen flow is solely obtained from the storage vessel. As a consequence, there is a significant pressure drop in the storage vessel (e.g. from 90 psig to 73 psig) as shown in Figure 5, when discharge flow from the product storage vessel is maintained at a steady rate of 16,000 SCFH.

The nitrogen production flow rate in the present invention reduces the pressure drop in the storage vessel because the beds continuously release nitrogen gas into the distribution system. In the two component PSA system of the present invention, the nitrogen flow rates vary from 32,000 to a low of 16,000 SCFH. This results in a sharply reduced change in pressure in the storage vessel. As shown in Figure 5, the pressure in the storage vessel varies only from 90 psig to 83 psig.

Thus, in accordance with the present invention, there is less change in the pressures of both the compressed air and nitrogen product storage vessels which correlates with less demand on the storage vessels to supplement the requirements of the system thereby enabling the use of smaller storage vessels.

Alternatively, use of the same capacity compressed air storage vessel employed in conventional systems can obtain higher average feed pressures. This can result in a higher nitrogen production rate from the system, resulting in increased plant productivity.

## EXAMPLE 2

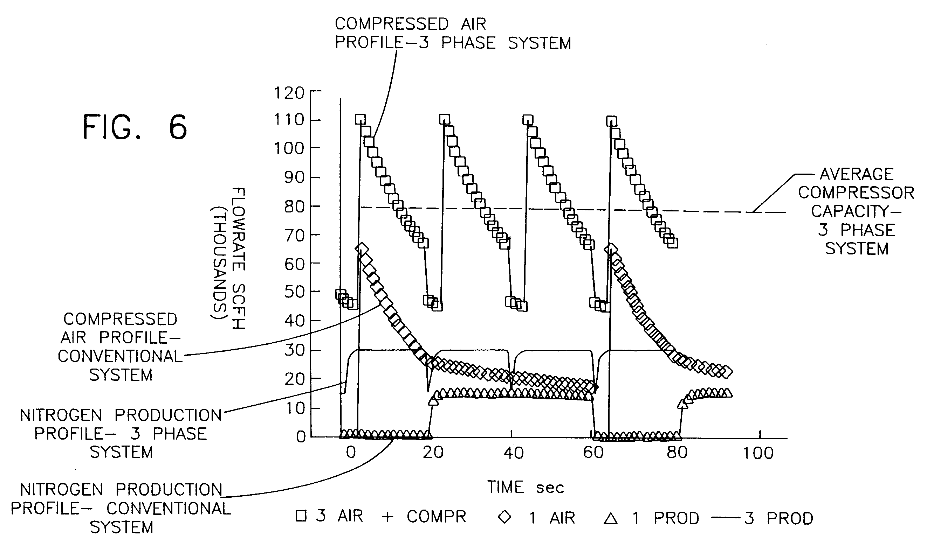

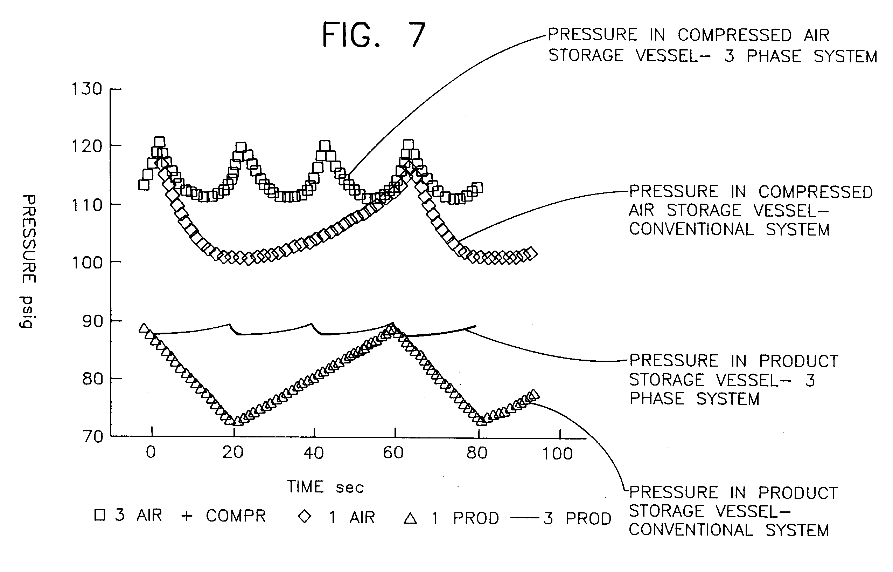

The following example of a three component PSA system is made with reference to Figures 6 and 7.

The compression system of the three component system has an average capacity of about 81,000 SCFH. Peak load demand in each nitrogen production stage is about 115,000 SCFH. Accordingly, the storage vessel for the compressed air is required to provide only about 40% of the compressed air capacity of the compressor system during peak loading.

Nitrogen production varies from a low of 16,000 SCFH to a high of 32,000 SCFH as in the two component system. However, in the three component system, two of the components are producing nitrogen during a major portion of the process cycle while one of the components is undergoing equalisation/depressurization. As a result, nitrogen production at the rate of 32,000 SCFH takes place during a substantial portion of the process cycle and the average nitrogen flow rate (30,000 SCFH) is only slightly below maximum production. Accordingly, the pressure swing in the storage vessel as shown in Figure 7 is so small (about 2 psig), it is possible in this embodiment to eliminate the nitrogen storage vessel entirely. Referring to Figure 6, at the commencement of the cycle nitrogen production is at the rate of 16,000 SCFH for one of the three systems. Immediately thereafter, an additional system commences nitrogen production so that the flow rate doubles over 4 seconds. During this time, the compressed air requirements rise from a low of 47,000 SCFH to 115,000 SCFH due to the peak loading needs of two of the systems. Once peak loading is reached, there is a sharp decrease in the flow rate of compressed air over the next 16 seconds to 70,000 SCFH and then a sudden drop to 50,000 SCFH as beds in two of the systems enter into the equalisation/depressurization stage. During this period, nitrogen production drops briefly to a low of 16,000 SCFH but almost immediately rises to a maximum output as one of the systems proceeds from depressurization to nitrogen production. Thereafter, the cycle continues as described above as each PSA system is operated 120° out of phase.

As shown in Figure 7, the pressure swing in the compressed air storage vessel (8 psig) is significantly reduced compared to the conventional one phase system. The pressure swing in the storage vessel for nitrogen gas (2 psig) is even more dramatic.

Modifications of the above-described embodiments of the invention may be made without departing from the spirit and scope of the invention. For example, valves 124, 148, 224 and 248 as shown in Figure 2 may be provided as check valves and additional control valves provided for each system 100, 200 of the product line 128 and distribution line 158.

## Claims

1. A method of separating nitrogen gas from air characterised by the steps of:

(a) continuously feeding compressed air from a compressor (104) and optionally a storage vessel (106) to at least two PSA systems (100; 200) connected together through a common compressed air feed line (108) and a common nitrogen gas product line (128), each PSA system (100; 102) comprising at least two adsorbent beds (A,B; C,D);

(b) continuously removing nitrogen gas from one bed of at least one of the PSA systems (100; 200) and forwarding the nitrogen gas to said product line (128);

(c) regenerating at least one of the beds to remove oxygen and other waste gases; and

(d) temporarily terminating nitrogen production of at least one PSA system, while at least one of the other PSA systems continues to receive compressed air and produce nitrogen gas.

2. The method of Claim 1, characterised in that the flow rate of compressed air fed from the storage vessel (106) does not exceed the average flow rate of compressed air from the compressor (104).

3. The method of Claim 1, characterised in that the ratio of the difference between the flow rate of compressed air from the compressor (104) and the compressed air needed to initiate nitrogen production is no more than about 67 percent.

4. The method of Claim 1, 2 or 3 characterised by feeding the compressed air and producing nitrogen gas from two PSA systems (100; 200).

5. The method of Claim 1, 2 or 3 characterised by feeding the compressed air and producing nitrogen gas from three PSA systems.

6. The method of Claim 1 characterised by the steps of:

(a) feeding compressed air to a first adsorbent bed of a first PSA system and a first adsorbent bed of a second PSA system while removing nitrogen gas from the first adsorbent bed of the second PSA system and regenerating a second bed of the first PSA system, and shortly thereafter removing nitrogen gas from the first adsorbent bed of the first PSA system;

(b) terminating the compressed air feed and nitrogen removal from the first adsorbent bed of the second PSA system, equalising the pressure in the first and second beds of the second PSA system, and then regenerating the first adsorbent bed of the second PSA system to remove impurities therefrom while feeding compressed air to the second bed of the second PSA system and shortly thereafter removing nitrogen gas therefrom;

(c) equalising the pressure of the first and second adsorbent beds of the first PSA system while terminating the compressed air feed and nitrogen removal from the first bed of the first PSA system;

(d) regenerating the first bed of first PSA system while feeding compressed air to the second bed of the first PSA system and shortly thereafter removing nitrogen gas from the second bed of the first PSA system;

(e) equalising the pressure between the first and second beds of the second PSA system while terminating the feeding of compressed air and the removal of nitrogen gas from the second bed of the second PSA system; and

(f) regenerating the second bed of the second PSA system while introducing compressed air to the first bed of the second PSA system and shortly thereafter removing nitrogen gas from the first bed of the second PSA system and equalising the pressure of the first and second beds of the first PSA system.

7. The method of Claim 1 characterised in that the method is conducted with three PSA systems, said method comprising conducting the method in accordance with the timing sequence substantially as shown and described in Figure 3.

8. Apparatus for separating nitrogen gas from air characterised by:

(a) at least two PSA systems (100; 200)-connected together through a common compressed air feed (108) and a common nitrogen gas product line (128), each system comprising at least two adsorbent beds (A,B; C,D);

(b) means (104, 106) for continuously feeding compressed air to at least one bed of at least one PSA system;

(c) means for continuously removing nitrogen gas from at least one bed of at least one PSA system;

(d) means for terminating nitrogen production of one of said PSA systems while at least one of the other PSA systems continues to receive compressed air and produce nitrogen gas.

9. The apparatus of Claim 8 characterised in that three PSA systems in one are connected together through a common compressed air feed and a common nitrogen gas product line.

10. The apparatus of Claim 8 characterised by:

(a) means for feeding compressed air to a first adsorbent bed of a first PSA system and a first adsorbent bed of a second PSA system, means for removing nitrogen gas from the first adsorbent bed of the second PSA system and means for regenerating the second bed of the first PSA system, and means for shortly thereafter removing nitrogen gas from the first adsorbent bed of the first PSA system;

(b) means for terminating the compressed air feed and nitrogen removal from the first bed of the second PSA system, means for equalising the pressure between the first and second beds of the first PSA system and means for regenerating the first bed of the second PSA system to remove impurities therefrom; and means of feeding compressed air to the second bed of the second PSA system and for removing nitrogen gas therefrom;

(c) means for equalising the pressure of the first and second beds of the first PSA system while terminating the compressed air feed and nitrogen removal from the first bed of the first PSA system;

(d) means for regenerating the first bed of the first PSA system while feeding compressed air to the second bed of the first PSA system and means for shortly thereafter removing nitrogen gas from the second bed of the first PSA system;

(e) means for equalising the pressure between the first and second beds of the second PSA system while terminating the feeding of compressed air and the removal of nitrogen gas from the second bed of the second PSA system; and

(f) means for generating the second bed of the second PSA system while introducing compressed air to the first bed of the second PSA system and shortly thereafter removing nitrogen gas from the first bed of the second PSA system, and means for equalising the pressure of the first and second beds of the first PSA system.

11. A method of separating nitrogen gas from air characterised by the steps of:

(a) feeding air under pressure to at least one of two or more PSA systems (100; 200); each system comprising at least two adsorbent beds (A,B; C,D) which preferentially adsorb the remaining constituents of the air relative to nitrogen; and

(b) the system (100; 200) being arranged to operate out-of-phase such that at least one system is producing nitrogen at substantially all times during operation of the method.

FIG. 1

PRIOR ART

EP 0 512 780 A1

FIG. 2

EP 0 512 780 A1

FIG. 3

VALVE

OPEN / CLOSED

TIME

EP 0 512 780 A1

FIG. 4

EP 0 512 780 A1

FIG. 5

PRESSURE IN COMPRESSED AIR
STORAGE VESSEL 2-PHASE SYSTEM

PRESSURE IN COMPRESSED
AIR STORAGE VESSEL-
CONVENTIONAL SYSTEM

PRESSURE IN PRODUCT
STORAGE VESSEL- 2
PHASE SYSTEM

PRESSURE IN PRODUCT
STORAGE VESSEL-
CONVENTIONAL SYSTEM

PRESSURE psig

TIME sec

□ 2 AIR   + COMPR   ◇ 1 AIR   △ 1 PROD —— 2 PROD

EP 0 512 780 A1

FIG. 6

COMPRESSED AIR
PROFILE—3 PHASE SYSTEM

AVERAGE
COMPRESSOR
CAPACITY—
3 PHASE
SYSTEM

FLOWRATE SCFH
(THOUSANDS)

COMPRESSED
AIR PROFILE—
CONVENTIONAL
SYSTEM

NITROGEN PRODUCTION
PROFILE— 3 PHASE
SYSTEM

NITROGEN PRODUCTION
PROFILE— CONVENTIONAL
SYSTEM

TIME sec

□ 3 AIR + COMPR    ◇ 1 AIR    △ 1 PROD ——3 PROD

EP 0 512 780 A1

16

FIG. 7

PRESSURE IN COMPRESSED AIR
STORAGE VESSEL— 3 PHASE SYSTEM

PRESSURE IN COMPRESSED
AIR STORAGE VESSEL—
CONVENTIONAL SYSTEM

PRESSURE IN PRODUCT
STORAGE VESSEL— 3
PHASE SYSTEM

PRESSURE IN PRODUCT
STORAGE VESSEL—
CONVENTIONAL SYSTEM

PRESSURE psig

TIME sec

□ 3 AIR   + COMPR   ◇ 1 AIR   △ 1 PROD ——3 PROD

EP 0 512 780 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 103 070 (BERGWERKSVERBAND GMBH)<br><br>* page 26, paragraph 1 -paragraph 2; claims 12,13 * | 1,4,6,8, 10,11 | C01B21/04<br>B01D53/04 |
| X | FR-A-2 531 097 (OSAKA OXYGEN INDUSTRIES LTD. , KAWASAKI STEEL CORPORATION)<br>* page 12, last paragraph; table III * | 1,4,6,8, 10,11 | |
| Y | | 5,7,9 | |
| Y | FR-A-2 313 313 (AIR PRODUCTS AND CHEMICALS, INC. )<br>* page 7, last paragraph * | 5,7,9 | |
| A | US-A-4 026 680 (J.J. COLLINS)<br>* figures 17,18 * | 1-11 | |
| A | FR-A-2 270 928 (L'AIR LIQUIDE, SA)<br>* page 18, line 15 - page 19, line 12; figure 3 * | 1 | |

TECHNICAL FIELDS SEARCHED (Int. Cl.5)

C01B
B01D

The present search report has been drawn up for all claims

| Place of search | Date of completion of the search | Examiner |
|---|---|---|
| THE HAGUE | 20 AUGUST 1992 | REEDIJK A.M.E. |